# FASCICULE DE BREVET EUROPEEN

(11) **EP 3 559 482 B1**
(45) Date de publication et mention de la délivrance du brevet: **25.11.2020**
(21) Numéro de dépôt: 17822289.9
(22) Date de dépôt: 21.12.2017
(51) Int. Cl.: F16B 5/02, F16B 37/04

(54) **DISPOSITIF D'ECARTEMENT POUVANT ETRE DISPOSE ENTRE DEUX SUPPORTS**
TRENNVORRICHTUNG, DIE ZWISCHEN ZWEI HALTERUNGEN ANGEORDNET WERDEN KANN
SEPARATING DEVICE WHICH CAN BE ARRANGED BETWEEN TWO MOUNTINGS

(30) Priorité: 23.12.2016 FR 1663337
(43) Date de publication de la demande: 30.10.2019
(73) Titulaire: A. Raymond et Cie, 38000 Grenoble (FR)
(72) Inventeur: LAMOUREUX, David, 38000 Grenoble (FR)
(74) Mandataire: IP Trust
(86) Numéro de dépôt international: PCT/EP2017/084071
(87) Numéro de publication internationale: WO 2018/115272

(56) Documents cités:
- DE-A1-102007 037 242
- DE-A1-102010 037 228
- DE-U1-202008 011 318
- DE-U1-202008 016 230
- JP-A- 2011 033 164
- US-A- 5 288 191

## Description

### DOMAINE DE L'INVENTION

La présente invention concerne un dispositif d'écartement pouvant être disposé entre deux supports de manière à combler la distance les séparant. L'invention trouve une application particulière dans le domaine de l'automobile, pour combler l'espace libre existant entre un élément porteur et une carrosserie de toit d'un véhicule et permettre, par exemple, la fixation de barres de toit sur ce véhicule.

### ARRIERE PLAN TECHNOLOGIQUE DE L'INVENTION

On connaît du document EP2532568 un dispositif d'écartement visant à combler un espace compris entre des éléments de tôleries qui composent la structure d'un véhicule et permettant de compenser des écarts de cote pouvant exister entre ces éléments. Ce dispositif d'écartement connu comprend une pièce de fixation destinée à prendre appui et/ou à être fixée sur un premier support et une pièce d'écartement présentant une extrémité d'appui destinée à entrer en contact avec un second support, placé en regard du premier. La pièce de fixation et la pièce d'écartement sont assemblées entre elles au niveau de filetages permettant de les déplacer l'une par rapport à l'autre selon une direction axiale, pour permettre d'ajuster le dispositif d'écartement à la distance séparant les deux supports.

Dans ce document cité, le dispositif d'écartement est rendu solidaire d'une barre de toit disposée sur la face extérieure du premier support par l'intermédiaire d'une vis traversant. Un système boulon - rondelle du côté de la face extérieure du second support permet de verrouiller le dispositif d'écartement et de maintenir fixement la barre de toile sur le premier support.

La pièce d'écartement est entraînée en rotation par la vis de fixation de la barre de toit. L'ajustement à la distance séparant les deux supports et la fixation de la barre de toit (ou plus généralement le verrouillage du dispositif d'écartement) sont réalisés simultanément. Si ces deux fonctions ne sont pas parfaitement coordonnées, il est possible que le verrouillage intervienne avant que la pièce d'écartement ne soit parfaitement en place, ce qui peut conduire à déformer l'un ou l'autre des supports.

Par ailleurs, la présence de la barre de toit du côté du premier support impose de travailler du côté du second support, à l'intérieur du véhicule, pour régler le dispositif d'écartement. L'espace réduit et confiné contribue à rendre l'installation du dispositif d'écartement malaisé.

Les documents DE102010037228, JP2011033164, DE202008016230U, DE102007037242, DE202008011318 et US5288191 concernent également des dispositifs d'écartements comprenant une pièce d'écartement entrainée par frottement par une vis d'entrainement. Lorsque la pièce d'écartement vient en contact avec un des support, l'effort axial qu'il est nécessaire d'appliquer à la pièce d'écartement est supérieure à l'effort de friction qui permet à la vis d'entrainer la pièce d'écartement, si bien que cette liaison est rompue, et prévient tout déplacement de la pièce d'écartement. Ce mécanisme nécessite un contrôle fin des efforts de frottement et des jeux de fonctionnement existant entre les pièces, et ne permet pas de toujours placer la pièce d'écartement parfaitement en place contre le support.

La présente invention vise à pallier tout ou partie des inconvénients précités.

### BREVE DESCRIPTION DE L'INVENTION

En vue de la réalisation de but, l'objet de l'invention propose dispositif d'écartement comprenant :
- une pièce de fixation destinée à être rendue solidaire d'un premier support et présentant un filetage interne;
- une pièce d'écartement présentant un filetage externe, une extrémité d'appui et une extrémité d'entraînement, la pièce d'écartement étant destinée à prendre appui du côté de son extrémité d'appui sur un second support, disposé en regard du premier support.

La pièce de fixation et la pièce d'écartement sont assemblées entre elles au niveau de leurs filetages respectifs et peuvent se déplacer l'une par rapport à l'autre selon une direction axiale pour ajuster le dispositif d'écartement à la distance séparant les deux supports.

Selon l'invention, le dispositif d'écartement comprend une bague d'entraînement, logée dans la pièce d'écartement et pouvant être entrainée en rotation par un outil, comprenant au moins un premier moyen de couplage pouvant coopérer avec un second moyen de couplage de la pièce d'écartement, formant un système à crabot, de manière à sélectivement coupler et découpler la bague d'entraînement et la pièce d'écartement.

On peut ainsi contrôler avec précision le positionnement de la pièce d'écartement sans être dépendant des efforts de friction pouvant apparaître entre deux pièces, ces efforts étant particulièrement difficiles à maitriser.

Selon d'autres caractéristiques avantageuses et non limitatives de l'invention, prises seules ou selon toute combinaison techniquement réalisable :
- la pièce de fixation comprend un corps d'appui et un organe de retenue permettant de solidariser le dispositif au premier support ;
- la bague d'entraînement est munie d'au moins un bossage ou d'au moins une empreinte pour faciliter l'application d'un couple de rotation par un outil ;
- la bague d'entraînement dépasse l'extrémité d'appui de la pièce d'écartement, lorsque le premier moyen de couplage est couplé au deuxième moyen de couplage;
- la bague d'entraînement présente une longueur choisie pour que le premier moyen de couplage soit découplé du second moyen de couplage de la pièce d'écartement lorsque l'extrémité d'appui de la pièce d'écartement et la bague d'entrainement sont affleurantes l'une avec l'autre ;
- le premier moyen de couplage est constitué d'un cran et le second moyen de couplage est constitué d'une encoche ;
- la bague d'entraînement présente, du côté de son extrémité dépassante, un épaulement, l'épaulement et le cran permettant de maintenir la bague d'entraînement logée dans la pièce d'écartement ;
- la pièce d'écartement comprend, du côté de son extrémité d'appui, un anneau d'appui pouvant contenir l'épaulement de la bague d'entrainement ;
- la bague d'entraînement est munie d'au moins une languette flexible à l'extrémité de laquelle est disposé le cran ;
- l'encoche est formée sur l'extrémité d'entrainement de la pièce d'écartement.

### BREVE DESCRIPTION DES DESSINS

D'autres caractéristiques et avantages de l'invention ressortiront de la description détaillée de l'invention qui va suivre en référence aux figures annexées sur lesquels :
- Les figures la à 1c représentent respectivement en vue éclatée, en vue de dessus et en perspective un dispositif d'écartement conforme à l'invention ;

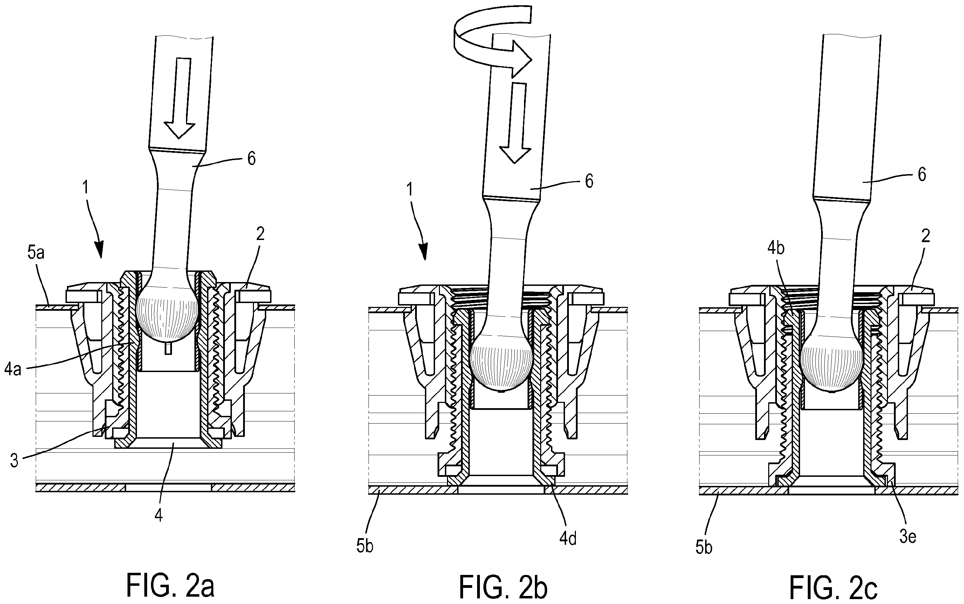

- les figures 2a à 2c représentent les différentes étapes de la mise en place d'un exemple particulier du dispositif d'écartement de l'invention ;

### DESCRIPTION DETAILLEE DE L'INVENTION

Un dispositif d'écartement conforme à l'invention est destiné à combler l'espace compris entre un premier support et un second support, disposés en regard l'un de l'autre. On désignera par le terme « face interne », les faces du premier et du second support qui sont placées en vis-à-vis l'une de l'autre ; et par « face externe » les faces du premier et du second support opposées à ces faces internes. La distance séparant le premier et le second support n'est pas précisément connue, et le dispositif de l'invention permet justement de compenser ces écarts pouvant exister d'un point à l'autre des supports. À ce titre, plusieurs dispositifs d'écartement peuvent être disposés entre les supports de sorte à contrôler plus précisément la distance les séparant sur toutes leurs étendues.

Usuellement, ces supports sont plans, au moins dans le voisinage de la position d'implantation du dispositif d'écartement. Les deux supports peuvent présenter un décalage angulaire et n'être pas parfaitement parallèles entre eux.

Le premier et le second support présentent chacun une ouverture disposée en vis-à-vis l'une de l'autre, permettant de placer le dispositif d'écartement entre les deux supports et permettant le passage d'un organe de verrouillage retenu du coté de chaque face externe des supports. Le dispositif d'écartement peut également avoir pour fonction de permettre la solidarisation d'un élément complémentaire sur la surface externe de l'un ou l'autre des supports. Dans ce cas, l'organe de verrouillage, tel qu'une vis traversante, permet également de fermement plaquer l'élément complémentaire contre la face externe de l'un des supports.

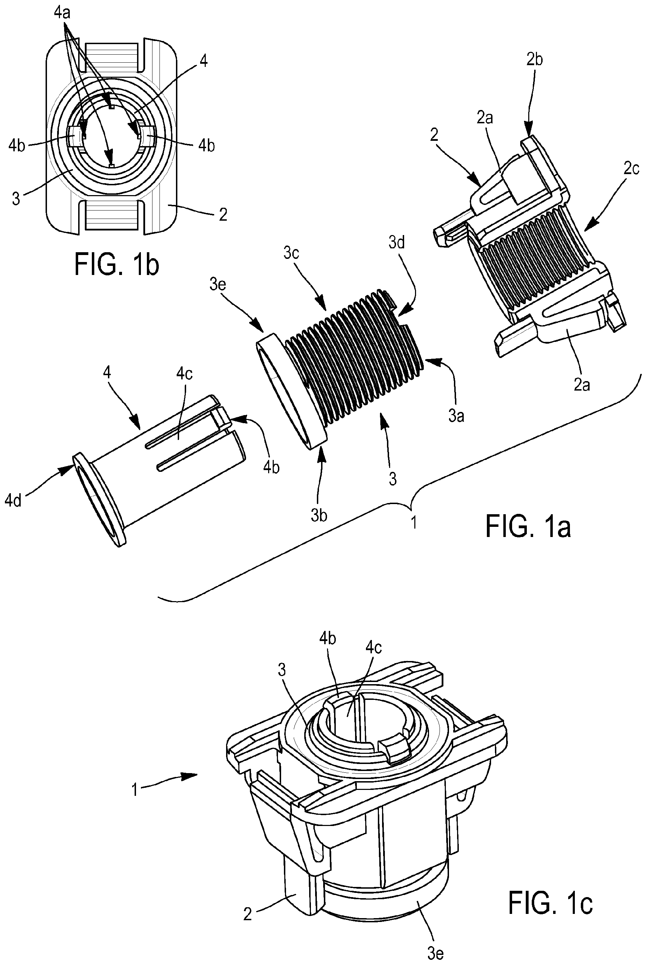

Les figures 1a, 1b et 1c représentent respectivement en vue éclatée, en vue de dessus et en perspective un dispositif d'écartement 1 conforme à l'invention.

Le dispositif d'écartement 1 comprend une pièce de fixation 2 présentant un filetage interne ou taraudage 2c. La pièce de fixation 2 est destinée à être rendue solidaire du premier support. À cet effet, elle peut comporter un organe 2a de retenue et un corps d'appui 2b. Le dispositif d'écartement 1 peut être introduit et positionné dans l'espace compris entre les deux supports par une ouverture préalablement aménagée dans le premier support. L'organe de retenue 2a peut comprendre une ou une pluralité de pattes flexibles 2a qui se contracte lorsque le dispositif d'écartement est introduit dans l'ouverture pour mettre en butée la face externe du premier support sur le corps d'appui 2b, et qui se rétracte pour verrouiller cette position. La pièce de fixation 2 peut également présenter une section extérieure non circulaire de manière à bloquer sa rotation vis-à-vis du support, une fois mise en place sur le premier support, comme cela est bien visible sur la figure 1c.

Le dispositif d'écartement 1 conforme à l'invention comprend également une pièce d'écartement 3 présentant un filetage externe 3c. La pièce d'écartement et la pièce de fixation 2 sont conçues pour être assemblés l'une à l'autre au niveau de leurs filetages 3c, 2c respectifs. L'entraînement en rotation de la pièce d'écartement 3 permet de déplacer les deux pièces l'une par rapport à l'autre selon une direction axiale.

La pièce d'écartement 3 présente une forme de cylindre creux, le filetage étant formé sur la surface extérieure de ce cylindre, de sorte à pouvoir être vissé et dévissé sur la pièce de fixation 2.

La pièce d'écartement 3 présente deux extrémités, une première extrémité d'entraînement 3a orientée du côté de la pièce de fixation 2, et une extrémité d'appui 3b à l'opposé de l'extrémité d'entrainement 3a. Lorsque le dispositif d'écartement 1 est disposé dans l'espace compris entre les deux supports, l'extrémité d'appui 3b de la pièce d'écartement 3 a pour fonction de prendre appui sur le second support pour préserver la distance séparant les deux supports même en présence d'efforts tendant à les rapprocher l'un de l'autre.

Pour permettre le réglage de cette prise d'appui, le dispositif 1 conforme à l'invention comporte également une bague d'entraînement 4. La bague d'entraînement 4 est conçue pour être logée dans la pièce d'écartement 3, par exemple à l'intérieur du cylindre creux. La bague d'entrainement 4 peut elle-même présenter la forme d'un cylindre creux dont le diamètre externe correspond sensiblement au diamètre interne du cylindre formant la pièce d'écartement 3, pour pouvoir y être insérée.

La bague d'entrainement 4 porte au moins une empreinte ou un bossage 4a permettant, par l'intermédiaire d'un outil adapté, d'appliquer un couple d'entraînement à la bague 4, de manière à la déplacer en rotation. L'empreinte ou le bossage peut être formé sur la paroi interne de la bague 4. Une pluralité de telles empreintes ou bossages peut être disposée pour former une fente, une étoile, un carré dans la bague d'entrainement 4 afin de faciliter la coopération avec l'extrémité d'un outil, tel qu'un tournevis, et son entraînement en rotation.

Selon l'invention, la bague d'entraînement 4 a pour fonction principale d'entraîner en rotation la pièce d'écartement 3, lorsqu'elle est elle-même entrainée en rotation par un outil. On peut de la sorte, visser et/ou dévisser la pièce d'écartement 3 dans la pièce de fixation 2, et ajuster le déplacement axial de la pièce d'écartement 3 pour mettre en contact l'extrémité d'appui 3b avec le deuxième support.

À cet effet, la bague d'entrainement 4 est munie d'au moins un premier moyen de couplage 4b, par exemple un cran 4b comme cela est représenté sur les figures la à 1c, et la pièce d'écartement 3 est munie, du côté de son extrémité d'entraînement 3a, d'au moins un second moyen de couplage 3d, tel qu'une encoche 3d. Préférentiellement, la bague 4 et la pièce d'écartement 3 sont chacun munie d'une pluralité de premiers et de second moyens de couplages, tels que des crans 4b et des encoches 3d.

L'ensemble formé de la bague 4 muni du premier moyen de couplage 4b et de la pièce d'écartement 3 muni du second moyen de couplage 3d forment un système à crabot, permettant de sélectivement coupler et découpler ces deux éléments entre eux.

Ainsi, comme cela est bien représenté sur les figures la à 1b, le cran 4b peut être placé dans l'encoche 3d de sorte à coupler la bague d'entraînement 4 et la pièce d'écartement 3. Dans cette configuration de couplage, un couple de rotation axiale appliqué à la bague d'entraînement 4 est transmis à la pièce d'écartement 3.

Avantageusement, le cran 4b est porté par une languette flexible 4c formée sur ou dans la paroi cylindrique de la bague d'entraînement 4. On peut de la sorte glisser la bague d'entraînement 4 dans la pièce d'écartement 3 par son extrémité d'appui 3 et faire déboucher le cran 4b dans l'encoche 3d.

Selon un mode de mise en œuvre particulièrement avantageux de l'invention, la bague d'entraînement 4, lorsqu'elle est logée dans la pièce d'écartement 3 et le cran 4b positionné dans la rainure 3d, dépasse l'extrémité d'appui 3b de la pièce d'écartement 3. On peut munir l'extrémité dépassante de la bague d'entraînement 3 d'un épaulement 4d afin de limiter l'amplitude du mouvement de coulissement ou le débattement de la bague 4 dans l'évidement cylindrique de la pièce écartement 3. Le cran 4b, d'un côté, et l'épaulement 4d de l'autre côté de la bague d'entraînement 4 forment des butées mécaniques permettant de maintenir la bague 4 logée dans la pièce d'écartement 3.

L'extrémité d'appui 3b de la pièce d'écartement 3 peut comprendre un anneau d'appui 3e dont les dimensions sont suffisantes pour accueillir l'extrémité de la bague d'entrainement 4, et notamment de l'épaulement 4d. Ainsi, lorsque l'épaulement 4d de la bague 4 est placé en butée de la pièce d'écartement 3 dans l'anneau d'appui 3e, celui-ci est susceptible d'entrer en contact avec le deuxième support.

Avantageusement, la longueur de la bague d'entrainement 4, et plus précisément la distance séparant le cran 4b de l'épaulement 4d est telle que, lorsque l'épaulement 4d et l'anneau d'appui 3e sont affleurant l'un avec l'autre, le cran 4b est délogé de l'encoche 3d de manière à découpler la pièce d'écartement 3 et la bague 4. D'une manière plus générale, la bague d'entraînement 4 présente une longueur choisie pour que le premier moyen de couplage 4b soit découplé du second moyen de couplage 3d de la pièce d'écartement 3 lorsque l'extrémité d'appui 3b de la pièce d'écartement 3 et la bague d'entrainement 4 sont affleurantes l'une avec l'autre.

Cette configuration avantageuse peut être mise à profit pour éviter de déformer l'un des supports lors de la mise en place du dispositif d'écartement 1, comme cela va être décrit en détail en référence aux figures 2a à 2c.

La figure 2a représente une vue en coupe d'un dispositif 1 conforme à l'invention fixé sur un premier support 5a. Un outil 6 est positionné du côté de la pièce de fixation 2, c'est-à-dire du côté de la face externe du premier support 5a sur lequel est fixé le dispositif 1. L'outil 6 présente une tête coopérant avec les bossages 4a formés sur la face interne de la bague d'entraînement 4.

La pression exercée par l'outil 6 sur la bague 4, éventuellement complétée des efforts de gravité, conduisent à placer le cran 4b dans la rainure 3d, de manière à coupler la bague 4 et la pièce d'écartement 3.

Le mouvement de rotation sur lui-même de l'outil 6, éventuellement complétée de son inclinaison, entraîne en rotation la bague 4 et la pièce d'écartement 3 qui lui est couplée.

Les filetages 2c, 3c dont sont munies les pièces de fixation et d'écartement 2, 3 conduisent à déplacer axialement la pièce d'écartement 2 et la bague 4 jusqu'à ce que l'épaulement 4d vienne en contact avec le deuxième support 5b, comme cela est représenté sur la figure 2b.

Le mouvement maintenu de rotation de l'outil 6 continue à entraîner le déplacement axial de la pièce d'écartement 3, mais pas de la bague 4 qui est en butée sur le support 5b.

Lorsque l'anneau 3e vient à son tour en appui du support 5b, le cran 4b se désengage de la rainure 3d de la pièce d'écartement 3 et découple la bague d'entraînement 4 de cette pièce. Le mouvement de rotation de l'outil 6, s'il est maintenu, n'entraîne plus en rotation la pièce d'écartement 3, et son déplacement axial est interrompu.

Le mécanisme de débrayage qui vient d'être décrit permet de mettre en place le dispositif d'écartement 1 sans prendre le risque d'écarter excessivement les deux supports 5a, 5b l'un de l'autre.

Lorsque le dispositif d'écartement 1 sert également de support de fixation à un élément complémentaire, la mise en place et l'ajustement du dispositif 1 se réalisent avant de positionner l'élément complémentaire, par exemple sur la face externe du premier support 5b, au niveau de la pièce de fixation 2. L'outil 6 peut donc être introduit de ce côté du support pour la mise en place du dispositif 1, puis l'éventuel élément complémentaire peut être fixé sur la pièce de fixation 2 au cours d'une étape l'assemblage final, par exemple en insérant une vis traversante, introduite du côté de la face externe du deuxième support 5b, l'élément complémentaire formant alors écrou.

L'invention trouve une application toute particulière dans le domaine de l'automobile, pour rendre solidaire une barre, formant l'élément complémentaire, sur le toit d'un véhicule. La faculté de pouvoir mettre en place la pièce d'écartement sans avoir besoin d'accéder à la face externe du deuxième support (correspondant à l'intérieur du véhicule) procure un gain ergonomique et de temps significatif.

Pour des raisons de facilité de fabrication et de coût, le dispositif 1 est avantageusement constitué de matière plastique, obtenu par moulage ou par extrusion. Mais il pourrait être constitué d'un autre matériau ou être obtenu par un autre procédé de fabrication, par exemple par fabrication additive.

Bien entendu, l'invention n'est pas limitée au mode de mise en œuvre décrit et on peut y apporter des variantes de réalisation sans sortir du cadre de l'invention tel que défini par les revendications.

## Revendications

1. Dispositif d'écartement (1) comprenant :
- une pièce de fixation (2) destinée à être rendue solidaire d'un premier support et présentant un filetage interne (2c) ;
- une pièce d'écartement (3) présentant un filetage externe (3c), une extrémité d'appui (3b) et une extrémité d'entraînement (3a), la pièce d'écartement (3) étant destinée à prendre appui du côté de son extrémité d'appui (3b) sur un second support, disposé en regard du premier support ;
la pièce de fixation (2) et la pièce d'écartement (3) étant assemblées entre elles au niveau de leurs filetages respectifs (2c, 3c) et pouvant se déplacer l'une par rapport à l'autre selon une direction axiale pour ajuster le dispositif d'écartement (1) à la distance séparant les deux supports, le dispositif d'écartement (1) étant **caractérisé en ce qu'**il comprend une bague d'entraînement (4), logée dans la pièce d'écartement (3) et pouvant être entrainée en rotation par un outil, la bague d'entraînement comprenant au moins un premier moyen de couplage (4b) pouvant coopérer avec un second moyen de couplage (3d) de la pièce d'écartement (3), formant un système à crabot, de manière à sélectivement coupler et découpler la bague d'entraînement (4) et la pièce d'écartement (3).

2. Dispositif d'écartement (1) selon la revendication précédente dans lequel la pièce de fixation (2) comprend un corps d'appui (2b) et un organe de retenue (2a) permettant de solidariser le dispositif (1) au premier support.

3. Dispositif d'écartement (1) selon l'une des revendications précédentes dans lequel la bague d'entraînement (4) est munie d'au moins un bossage ou d'au moins une empreinte pour faciliter l'application d'un couple de rotation par un outil.

4. Dispositif d'écartement (1) selon l'une des revendications précédentes dans lequel la bague d'entraînement (4) dépasse l'extrémité d'appui (3b) de la pièce d'écartement, lorsque le premier moyen de couplage (4b) est couplé au deuxième moyen de couplage (3d).

5. Dispositif d'écartement (1) selon l'une des revendications précédentes dans lequel la bague d'entraînement (4) présente une longueur choisie pour que le premier moyen de couplage (4b) soit découplé du second moyen de couplage (3d) de la pièce d'écartement (3) lorsque l'extrémité d'appui (3b) de la pièce d'écartement (3) et la bague d'entrainement (4) sont affleurantes l'une avec l'autre.

6. Dispositif d'écartement (1) selon l'une des revendications précédentes dans lequel le premier moyen de couplage (4b) est constitué d'un cran et le second moyen de couplage (3d) est constitué d'une encoche.

7. Dispositif d'écartement (1) selon la revendication précédente dans lequel la bague d'entraînement (4) présente, du côté de son extrémité dépassante, un épaulement (4d), l'épaulement (4d) et le cran (4b) permettant de maintenir la bague d'entraînement (4) logée dans la pièce d'écartement (3).

8. Dispositif d'écartement (1) selon la revendication précédente dans lequel la pièce d'écartement (3) comprend, du côté de son extrémité d'appui (3c), un anneau d'appui (3e) pouvant contenir l'épaulement (4d) de la bague d'entrainement (4).

9. Dispositif d'écartement (1) selon l'une des revendications 6 à 8 dans lequel la bague d'entraînement (4) est munie d'au moins une languette flexible (4c) à l'extrémité de laquelle est disposé le cran (4b).

10. Dispositif d'écartement (1) selon l'une des revendications 6 à 9 dans lequel l'encoche (3d) est formée sur l'extrémité d'entrainement (3a) de la pièce d'écartement (3).

## Patentansprüche

1. Abstandshaltervorrichtung (1), umfassend:
- ein Befestigungselement (2), das mit einem ersten Träger fest verbunden werden soll und ein Innengewinde (2c) aufweist;
- einen Abstandshalter (3) mit einem Außengewinde (3c), einem Stützende (3b) und einem Mitnehmerende (3a), wobei der Abstandshalter (3) auf der Seite seines Stützendes (3b) auf einem zweiten Träger, der gegenüber dem ersten Träger angeordnet ist, getragen werden soll;
wobei das Befestigungselement (2) und der Abstandshalter (3) an ihren jeweiligen Gewinden (2c, 3c) zusammengebaut sind und sich relativ zueinander in axialer Richtung bewegen können, um die Abstandshaltervorrichtung (1) auf die Distanz, die die beiden Halter trennt, einzustellen, wobei die Abstandshaltervorrichtung (1) **dadurch gekennzeichnet ist, dass** sie einen Mitnehmerring (4) umfasst, der in dem Abstandshalter (3) untergebracht ist und der von einem Werkzeug rotierend angetrieben werden kann, wobei der Mitnehmerring mindestens ein erstes Kopplungsmittel (4b) umfasst, das mit einem zweiten Kopplungsmittel (3d) des Abstandshalters (3) zusammenwirken kann und ein Kopplungsträgersystem bildet, um den Mitnehmerring (4) und den Abstandshalter (3) selektiv zu koppeln und zu entkoppeln.

2. Abstandshaltervorrichtung (1) nach dem vorhergehenden Anspruch, bei der das Befestigungsteil (2) einen Stützkörper (2b) und ein Rückhalteelement (2a) umfasst, die die Befestigung der Vorrichtung (1) am ersten Träger ermöglichen.

3. Abstandshaltervorrichtung (1) nach einem der vorhergehenden Ansprüche, bei der der Mitnehmerring (4) mit mindestens einem Dorn oder mindestens einer Kavität versehen ist, um die Anwendung eines Drehmoments durch ein Werkzeug zu erleichtern.

4. Abstandshaltervorrichtung (1) nach einem der vorhergehenden Ansprüche, bei der der Mitnehmerring (4) über das Stützende (3b) des Abstandshalters hervorsteht, wenn das erste Kopplungsmittel (4b) mit dem zweiten Kopplungsmittel (3d) gekoppelt ist.

5. Abstandshaltervorrichtung (1) nach einem der vorhergehenden Ansprüche, bei der der Mitnehmerring (4) eine Länge aufweist, die so gewählt ist, dass das erste Kopplungsmittel (4b) von dem zweiten Kopplungsmittel (3d) des Abstandshalters (3) entkoppelt ist, wenn das Stützende (3b) des Abstandshalters (3) und der Mitnehmerring (4) bündig miteinander abschließen.

6. Abstandshaltervorrichtung (1) nach einem der vorhergehenden Ansprüche, bei der das erste Kopplungsmittel (4b) aus einer Kerbe besteht und das zweite Kopplungsmittel (3d) aus einer Aussparung besteht.

7. Abstandshaltervorrichtung (1) gemäß dem vorhergehenden Anspruch, bei der der Mitnehmerring (4) auf der Seite seines überstehenden Endes einen Vorsprung (4d) aufweist, wobei der Mitnehmerring (4) durch den Vorsprung (4d) und die Sperre (4b) im Abstandshalter (3) gehalten werden kann.

8. Abstandshaltervorrichtung (1) gemäß dem vorhergehenden Anspruch, bei der der Abstandshalter (3) auf der Seite seines Stützendes (3c) einen Stützring (3e) aufweist, der den Vorsprung (4d) des Mitnehmerrings (4) aufnehmen kann.

9. Abstandshaltervorrichtung (1) nach einem der Ansprüche 6 bis 8, bei der der Antriebsring (4) mit mindestens einer flexiblen Lasche (4c) versehen ist, an deren Ende die Sperre (4b) angeordnet ist.

10. Abstandshaltervorrichtung (1) nach einem der Ansprüche 6 bis 9, bei der die Aussparung (3d) am Antriebsende (3a) des Abstandshalters (3) ausgebildet ist.

## Claims

1. Spacer device (1) comprising:
- a fastener (2) intended to be rigidly connected to a first support and having an internal thread (2c);
- a spacer (3) having an external thread (3c), a support end (3b) and a drive end (3a), the spacer (3) being intended to rest on the side of its support end (3b) on a second support, arranged opposite the first support;
the fastener (2) and the spacer (3) being interconnected at their respective threads (2c, 3c) and being able to move relative to one another in an axial direction in order to adjust the spacer device (1) to the distance separating the two supports, the spacer device (1) being **characterized in that** it comprises a drive ring (4) which is housed in the spacer (3) and is capable of being rotated by a tool, the drive ring comprising at least one first coupling means (4b) that is capable of engaging with a second coupling means (3d) of the spacer (3), forming a dog clutch system, so as to selectively couple and decouple the drive ring (4) and the spacer (3).

2. Spacer device (1) according to the preceding claim, wherein the fastener (2) comprises a support body (2b) and a retaining member (2a) making it possible to rigidly connect the device (1) to the first support.

3. Spacer device (1) according to either of the preceding claims, wherein the drive ring (4) is provided with at least one embossment or at least one recess to facilitate the application of a torque by a tool.

4. Spacer device (1) according to any of the preceding claims, wherein the drive ring (4) projects beyond the support end (3b) of the spacer when the first coupling means (4b) is coupled to the second coupling means (3d).

5. Spacer device (1) according to any of the preceding claims, wherein the drive ring (4) has a length which is selected such that the first coupling means (4b) is decoupled from the second coupling means (3d) of the spacer (3) when the support end (3b) of the spacer (3) and the drive ring (4) are flush with one another.

6. Spacer device (1) according to any of the preceding claims, wherein the first coupling means (4b) consists of a catch and the second coupling means (3d) consists of a notch.

7. Spacer device (1) according to the preceding claim, wherein the drive ring (4) has a shoulder (4d) on the side of its projecting end, the shoulder (4d) and the catch (4b) making it possible to keep the drive ring (4) housed in the spacer (3).

8. Spacer device (1) according to the preceding claim, wherein the spacer (3) comprises, on the side of its support end (3c), a support ring (3e) capable of containing the shoulder (4d) of the drive ring (4).

9. Spacer device (1) according to any of claims 6 to 8, wherein the drive ring (4) is provided with at least one flexible tongue (4c) at the end of which the catch (4b) is arranged.

10. Spacer device (1) according to any of claims 6 to 9, wherein the notch (3d) is formed on the driving end (3a) of the spacer (3).
